# EUROPEAN PATENT SPECIFICATION

(11) **EP 2 692 234 B1**
(45) Date of publication and mention of the grant of the patent: **10.05.2017**
(21) Application number: 12179299.8
(22) Date of filing: 03.08.2012
(51) Int. Cl.: A22C 11/12, B65B 25/06, B65B 61/28

(54) **Discharge protection cage**
Ablassschutzkäfig
Cage de protection de décharge

(43) Date of publication of application: 05.02.2014
(73) Proprietor: Poly-clip System GmbH & Co. KG, 65795 Hattersheim (DE)
(72) Inventor: Sames, Jörg, 35418 Alten Buseck (DE)
(74) Representative: Eisenführ Speiser

(56) References cited:
- EP-A1- 0 399 195
- DE-A1-102011 100 597
- US-A1- 2005 247 026
- US-A1- 2010 287 883

## Description

The present invention relates to a discharge device for a clipping machine for producing sausage-shaped products, like sausages, according to the preamble of independent claim 1.

In particular, the invention concerns a discharge device for a clipping machine for producing sausage-shaped products, like sausages, which comprises at least one guiding element for guiding a sausage-shaped product completed in the clipping machine and leaving the clipping machine along a discharge direction, from a discharge area of the clipping machine to a handling station for the sausage-shaped product next to the clipping machine.

It is the usual practice in manufacturing sausage-shaped products to use automatic clipping machines for introducing a filling material, e.g. sausage meat, via a filling tube into a flexible packaging material, like a tubular casing, which is closed by a closure means, referred to as closing clip, at its first end facing in the feeding direction of the filling material. After the filling operation is concluded, a gathered plait-like portion, which is free of filling material, is formed by a displacer unit of the clipping machine. Two more clips are then applied to that plait-like portion by closing means of the clipping machine. The first of the two closing clip is applied to close the second end of the filled packaging material, and a second closing clip is applied for closing the first end of the subsequent sausage-shaped product.

Thereafter, said plait-like portion is severed between said two clips creating one completed sausage-shaped product and packaging material closed at its first end to be filled, in order to form the next sausage-shaped product.

The completed sausage-shaped product is then leaving the clipping machine for transporting the completed sausage-shaped product from the discharge area of the clipping machine to a further processing area or handling station, respectively. Said further processing area or next handling station is usually in a certain distance to the discharge area of the clipping machine. In order to bridge that distance between said discharge area and the further processing area, typically a discharge device is provided which can also function as a supporting device for the sometimes damageable sausage-shaped products. In particular when manufacturing small sausage-shaped products, said discharge device is of great importance for preventing said small sausage-shaped products from falling between the discharge area of the clipping machine and the further processing area or next handling station.

Such a practice for producing sausage-shaped products is disclosed, for example, by DE patent application 10 2011 100 597.

From EP patent application 0 399 195, a clipping machine for producing sausages by filling a tubular casing material and closing said casing material by closure clips is known. The clipping machine has a closing area from which a chute extends in a discharge direction for discharging the sausages out of the clipping machine. Covering plates which are attached to the clipping machine, surround the outlet opening of the clipping machine and include light sensors for securing the closing area in the region of the discharge opening.

US patent application 2005/0247026 discloses a modular clipping packaging apparatus for packing products in tubular casings or nettings. The apparatus includes a clipping module and a discharge chute. The clipping module is covered by housing guards which have an opening through which the chute extends.

In the production of sausage-shaped products, it is often the case that the operator of the clipping machine is reaching for the sausage-shaped product which is just about to be completed, in order to hold onto or support said sausage-shaped product and also to guide it into a certain direction when leaving the discharge area. However, it is also often the case that the hand of the operator reaching into the discharge area of the clipping machine is getting caught by the moving parts of the clipping machine, e.g. displacer elements or severing device. Since clipping machines are often operated at relative high speeds with immense forces, severe injuries are consequently possible.

The object of the present invention is to solve the above described problem. In particular, it is the object of the present invention to provide a discharge device according to independent claim 1, with which a completed sausage-shaped product can be effectively guided from the discharge area of the clipping machine to a further processing area or next handling station while at the same time preventing the operator from being severely injured by the moving parts of said clipping machine.

For solving the above mentioned technical problem, it is proposed, according the present invention, a discharge device for a clipping machine for producing sausage-shaped products, like sausages according to claim 1, which comprises at least one guiding element for guiding a sausage-shaped product completed in the clipping machine and leaving the clipping machine along a discharge direction, from a discharge area of the clipping machine to a handling station for the sausage-shaped product next to the clipping machine. Moreover, it is proposed that a protecting means is provided, which surrounds, together with the guiding element, at least partially the discharge area of the clipping machine, for avoiding a reaching-into in the discharge area of the clipping machine and which provides, together with the guiding element, at least one outlet opening for discharging the sausage-shaped product from the discharge device to the next handling station. The protecting means can be a fixed part of the clipping machine, but can also be separated from the machine as an accessory for said specific machine or as an accessory with a general coupling for every clipping machine

Other preferred embodiments of the present invention are defined within subclaims 2 to 14 following said independent claim 1.

In particular, it is of advantage that the protecting means are formed by at least one protecting plate as well as an at least one first spacing element, and that the protecting plate and the guiding element are arranged spaced apart to each other by the at least one first spacing element. Thereby, a tunnel-shaped protection is being provided in-between said guiding element, protecting plate and first spacing element for guiding the completed sausage-shaped products towards a certain direction after leaving the discharge area of the clipping machine and, at the same time, covering the discharge area from above, so that a reaching-into in the discharge area is being impeded.

According to another preferred embodiment, it is also possible that the at least one first spacing element is arranged at the side edges of the guiding element as well as the protecting plate which both face to the clipping machine, and has an inlet opening for the sausage-shaped product leaving the clipping machine.

It is also advantageous, that the protecting means comprise at least one second spacing element.

It is also possible, that the second spacing element is arranged at least substantially perpendicular to the first spacing element.

In order to form the discharge device as a relative compact design, the protecting plate, the guiding element as well as the first and second spacing elements define an at least approximately cuboid-shaped flat box.

For providing an outlet port at the discharge device, at least one of the lateral surfaces of the cuboid-shaped box is at least partly open. In a preferred embodiment, at least two of the lateral surfaces of the cuboid-shaped box are at least partly open.

According to another preferred embodiment of the present invention, it is also possible that the lateral surfaces of the cuboid-shaped box being opposite to the first and second spacing element are open. By doing so, sausage-shaped products having a total length extending the width of the discharge device can still be handled, i.e. guided, by the discharge device.

In order to adapt the contact area of the second spacing element to the typical round contour of the sausage-shaped product, it is also advantageous, that the second spacing element being arranged at least approximately in the discharge direction of the sausage-shaped product leaving the clipping machine and connecting the guiding element with the protecting plate, define, referred to its cross-section, at least approximately a half circle being arched outwardly.

It is also possible, that at least the protecting means are provided with at least one slit which is preferably arranged at least substantially parallel to the edges of the protecting means and the guiding element facing to the clipping machine. The one or several slits provide a view inside the discharge device and onto the completed sausage-shaped products leaving the clipping machine.

According to another preferred embodiment of the present invention, it is also possible that the protecting plate and the second spacing element are provided with slits which are preferably arranged parallel to each other and which have preferably a width being at least substantially equal to the width of the area between two succeeding slits. It is advantageous, that the lengths of the slits of the second spacing element increase consecutively from the end of the second spacing element being arranged proximal to the clipping machine, to the end of the second spacing element being arranged distal to the clipping machine.

For being able to carry out cleaning operations in the area between the discharge device and clipping machine, it is preferably that the discharge device can reversibly hinged away from the clipping machine. This can be done around a pivoting axis extending preferably and at least substantially horizontally in a direction perpendicular to axis A or discharge direction R.

In order to change the angle of the discharge device relative to the clipping machine, an angular positioning means for adjusting and locking the discharge device pivotable around a rotation axis which coincides with the discharge direction of the sausage-shaped product leaving the clipping machine.

According to another preferred embodiment of the present invention, the angular positioning means comprises an adapter device and an adjusting device.

For limiting the risk of damaging the skin of the completed sausage-shaped products extending beyond or finally leaving the discharge device, at least the corner of the protecting means being farthest to the discharge area of the clipping machine is rounded.

Other advantages and one embodiment of the present invention shall now be described with reference to the attached drawings. The term "top", "bottom", "left" and "right" used when describing the embodiment relate to the drawings orientated in such a way that the reference numerals and name of the figures can be read normally.

In the drawings:
- Fig. 1: shows a first isometric view of an inventive discharge device for a clip-ping machine;
- Fig. 2: shows a second isometric view of the inventive discharge device;
- Fig. 3: shows a third isometric view of the inventive discharge device;
- Fig. 4: shows a fourth isometric view of the inventive discharge device;

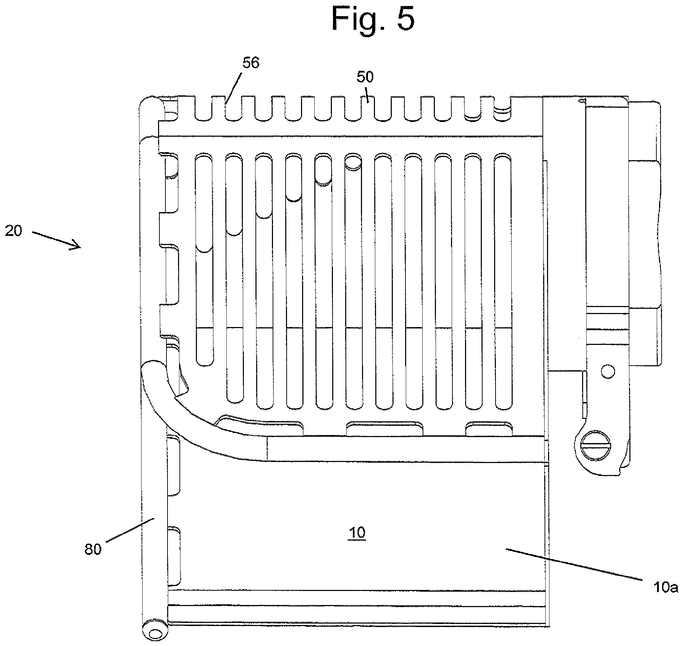

- Fig. 5: shows a front view of the inventive discharge device with a guiding element, a protecting means, a first and second spacing element as well as an adapter device and adjusting device;
- Fig. 6: shows a right-hand side view of the inventive discharge device with the guiding element, protecting means, the first and second spacing element as well as the adapter device and adjusting device;

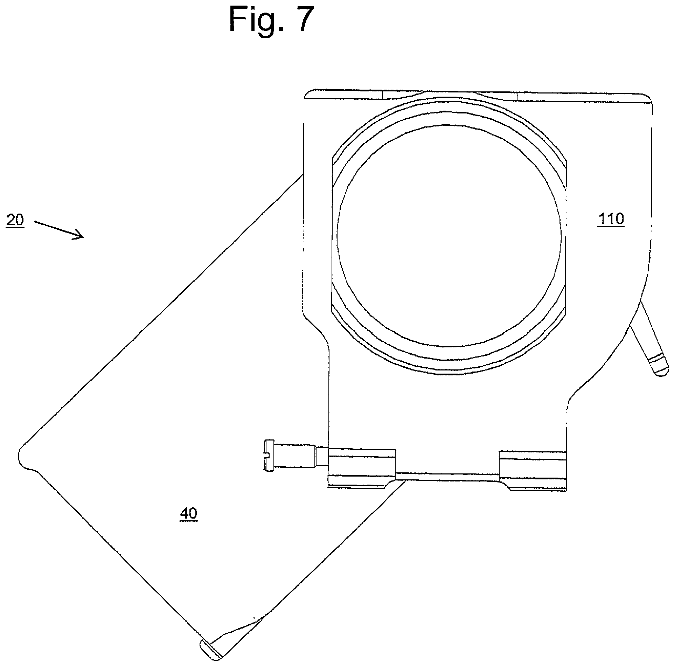

- Fig. 7: shows a left-hand side view of the inventive discharge device with the guiding element, protecting means, the first and second spacing element as well as the adapter device and adjusting device; and

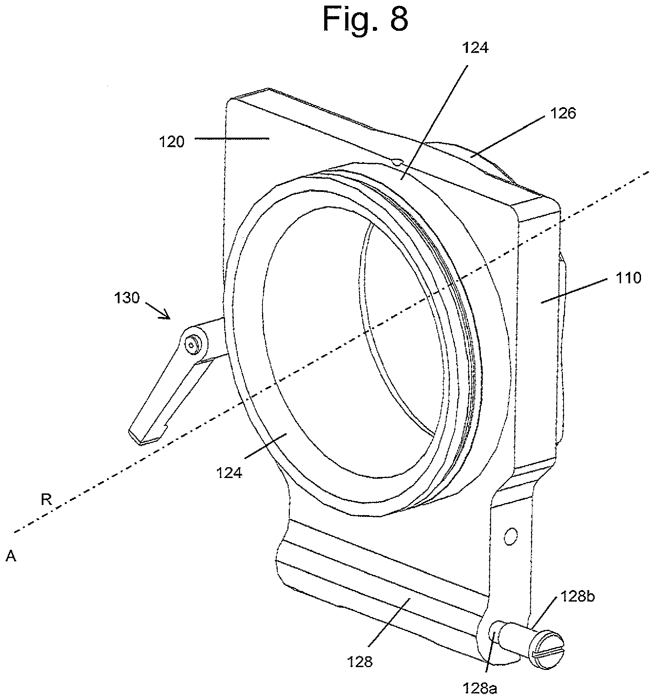

- Fig. 8: shows an isometric view of the adapter device and the adjusting device as components of the inventive discharge device.

The embodiment of a discharge or delivering device, respectively, according to the invention being described in the following, is used in the production of sausages. The inventive discharge device may also be used, of course, in the production of sausage-shaped products that do not include foodstuffs, but, for example, sealing compounds or adhesives etc.

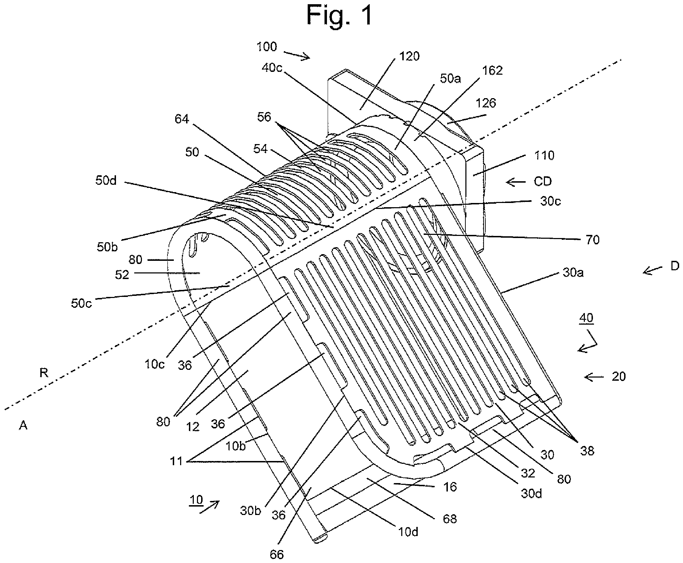

According to the preferred embodiment of the present invention, Fig. 1 shows a first isometric view of an inventive discharge device D together with a rotation axis R and a discharge direction A. Rotation axis R coincides with discharge direction A. Discharge device D comprises basically three main sub-assemblies, i.e. a guiding element 10, a protecting means 20 and an angular positioning means 100.

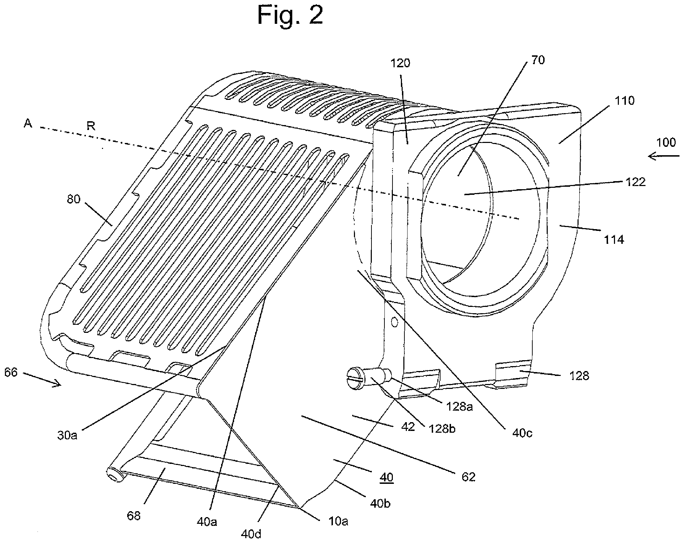

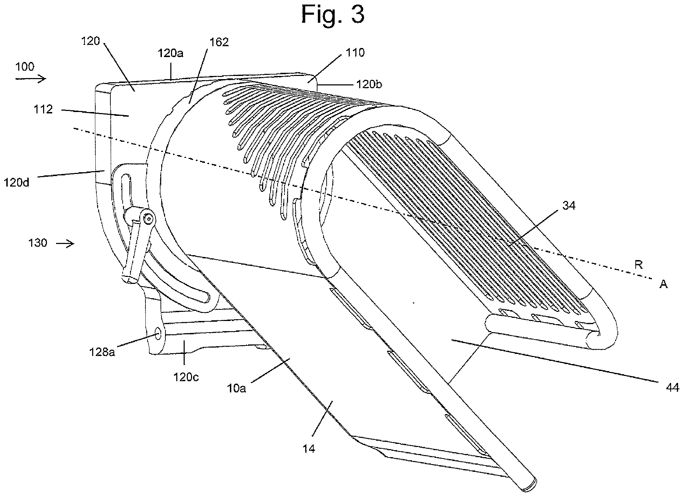

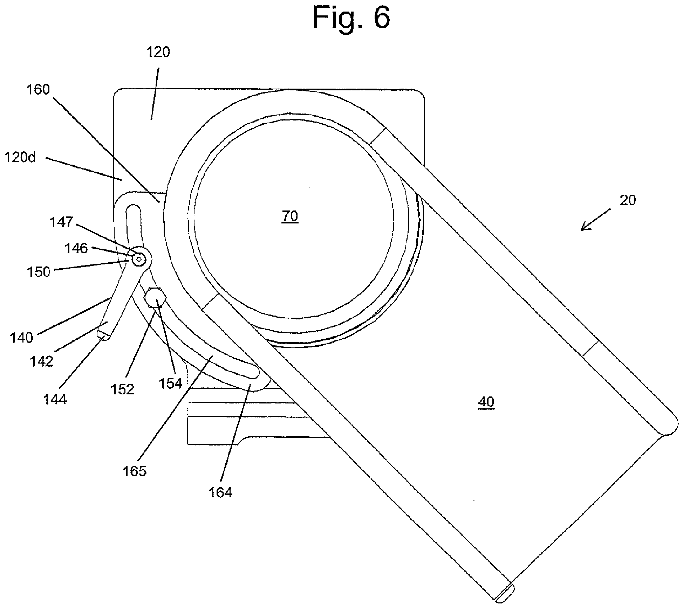

Guiding element 10 made preferably from a metal plate, is essentially in form of a flat rectangular plate having a front surface 12 and a back surface 14 (cf. Fig. 3). Moreover, guiding element 10 also comprises a first edge 10a (cf. Figs. 2, 3), a second edge 10b, a third edge 10c and a fourth edge 10d. As best seen in Fig. 6, the second edge 10b has cut-outs 11 leaving this second edge 10b as a discontinuous outer edge. Beyond that, guiding element 10 also comprises a double-kinked ending element 16 being bent up towards discharge device D.

As also shown in Fig. 1, discharge device D also comprises a protecting means 20 having a protecting plate 30, a first spacing element 40 (cf. Fig. 2) as well as a second spacing element 50.

Protecting plate 30 made preferably from a metal plate is essentially in form of a flat rectangular plate comprises a front surface 32 and a back surface 34 (cf. Fig. 3). Beyond that, protecting plate 30 also comprises a first edge 30a, a second edge 30b, a third edge 30c and a fourth edge 30d. Second and fourth edges 30b, 30d of protecting plate 30 have cut-outs 36 leaving second and fourth edges 30b, 30d as discontinuous outer edges. The corner between second and fourth edges 30b, 30d comprises a radius, in particular in order to avoid any injuries of an operator of the clipping machine at which inventive discharge device D is attached. Furthermore, protecting plate 30 also comprises longitudinal parallel slits 38. Longitudinal parallel slits 38 are all in a parallel alignment to first and second edges 30a, 30b.

As shown in Fig. 2, first spacing element 40 made preferably from a metal plate, is in form of a flat rectangular plate comprising an outer surface 42 and, as best seen in Fig. 3, an inner surface 44. First spacing element 40 comprises a first edge 40a, a second edge 40b, a third edge 40c (cf. also Fig. 1) and a fourth edge 40d. Third edge 40c is at least approximately in form of a semi-circle.

As shown in Fig. 1, second spacing element 50 made preferably from a metal plate, is in form of an arched rectangular plate comprising a concave surface 52 and a convex surface 54. Second spacing element 50 has a first edge 50a, a second edge 50b, a third edge 50c and a fourth edge 50d. First and second edges 50a, 50b are each in form of a semi-circle. Also, second edge 50b has cut-outs leaving this second edge 50b as a discontinuous outer edge. Furthermore, second spacing element 50 also comprises longitudinal parallel slits 56. As shown in Figs. 3, 4 and 6, longitudinal parallel slits 56 are of increasing length, whereby the slit 56 with the smallest length is closest to first edge 50a and the slit 56 with the greatest length is closest to the second edge 50b.

Guiding element 10, protecting plate 30, first spacing element 40 and second spacing element 50 are arranged to each other so that the protecting means basically forms a cuboid-shaped flat box 60. For this, front surface 12 of guiding element 10 and back surface 34 of protecting plate 30 are in parallel and overlapping alignment to each other. Guiding element 10 and protecting plate 30 are connected to each other, but with distance by first and second spacing element 40, 50. The size of the distance between guiding element 10 and protecting plate 30 and thus the width of spacing elements 40, 50 is such that a sausage-shaped product leaving the clipping machine can pass through discharge device trouble-free. First edge 40a of first spacing element 40 is connected to first edge 30a of the protecting plate 30 and second edge 40b of first spacing element 40 is connected to first edge 10a of guiding element 10. Outer and inner surfaces 42, 44 of first spacing element 40 are in a perpendicular alignment to front and back surfaces 12, 14 of guiding element 10.

Fourth edge 50d of second spacing element 50 is connected to third edge 30c of protecting plate 30 and third edge 50c of second spacing element 50 is connected to third edge 10c of guiding element 10. Second spacing element 50 is thereby arranged in such a way that its convex surface 54 is facing outwards and away from discharge device D. In contrast to that, concave surface 52 of second spacing element 50 is facing inside the cuboid-shaped box 60.

As shown in Figs. 1 and 3, protecting means 20, which is in form of cuboid-shaped flat box 60 (as described above), comprises a first lateral surface 62, a second lateral surface 64, a third lateral surface 66, a fourth lateral surface 68 as well as a circular opening 70. First lateral surface 62 is formed by first spacing element 40 and second lateral surface 64 is formed by second spacing element 50. Third lateral surface 66 which is positioned opposite to first spacing element 40, and fourth lateral surface 68 which is positioned opposite to second spacing element 50, are open for leaving outlets for completed sausage-shaped products on cuboid-shaped flat box 60 forming protecting means 20.

Circular opening 70 is formed by semi-circular third edge 40c of first spacing element 40 and arched first edge 50a of second spacing element 50. Circular opening 70 is essentially defining the discharge area CD of the not shown clipping machine through which completed sausage-shaped products are leaving the clipping machine and entering the discharge device D.

In addition to that, second edge 10b of guiding element 10, second edge 50b of second spacing element 50, second edge 30b of protecting plate 30, fourth edge 30d of protecting plate 30 as well as the curved corner between second and fourth edges 30b, 30d of protecting plate 30 is covered by a pipe element 80 making these edges 10b, 30b, 30d, 50b essentially round. Pipe element 80 can be made of plastic, but any other material assisting the function of pipe element 80 as a protection can also be used. Thereby, the sharp edges on the discharge device D are being eliminated, so that the likelihood of damaging the (not shown) sausage-shaped products or injuring the (not shown) operator is reduced.

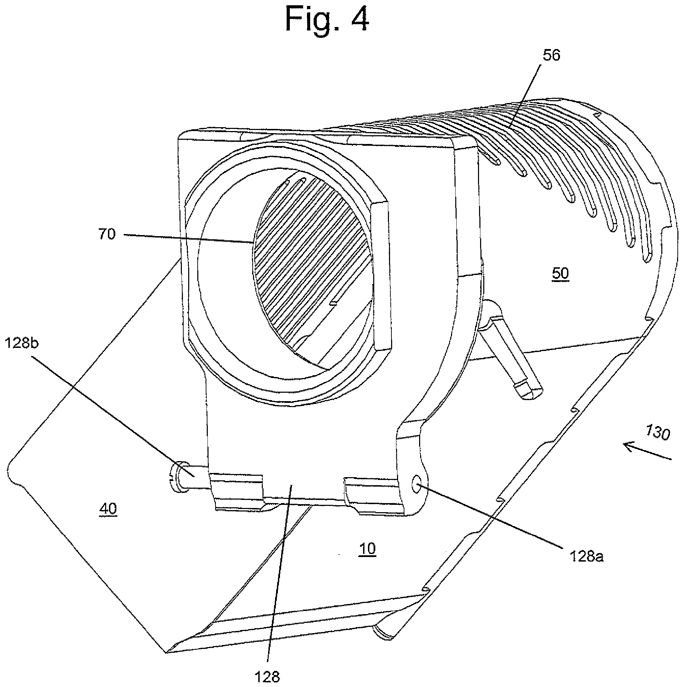

As also shown in Fig. 1, discharge device D comprises an angular positioning means 100. As best shown in Fig. 3, angular positioning means 100 comprises an adapter device 110 as well as an adjusting device 130. Adapter device 110 has a first surface 112 and a second surface 114. First surface 112 is facing in discharge direction A and second surface 114 is facing in the opposite direction, i.e. against discharge direction A. Second surface 114 is best shown in Fig. 4. Beyond that, adapter device 110 also comprises a support plate 120 with a first edge 120a, a second edge 120b, a third edge 120c and fourth edge 120d. Support plate 120 also comprises a circular hole 122 as well as a first flange 124 and a second flange 126. First flange 124 is extending in discharge direction A and second flange 126 is extending opposite to discharge direction A. Adapter device 110 also comprises a mounting element 128 for mounting angular positioning device 100 to the clipping machine. Mounting device 128 comprises a longitudinal bore 128a which extends perpendicular to discharge direction A, and a pin element 128b extending into longitudinal bore 128a.

Moreover, it is possible to arrange discharge device D such that it can be pivoted around the axis defined by mounting element 128. In particular, discharge device D can then be pivoted or hinged away from the clipping machine for cleaning operation of the clipping machine. For fixing discharge device D in the operating position, i.e. in the situation when discharge device D is pivoted to the clipping machine such that a completed product can be discharged via opening 70 to protecting means 20, a preferably spring-loaded bolt (not shown) being provided at the clipping machine, can be provided. In the operating position of discharge device D, said bolt can come in engagement with a hole which is provided at discharge device D and which can be seen in Fig. 2 above pin element 128a without a reference number.

Adjusting device 130 comprises an adjusting handle-element 140, a first hole 150 and a second hole 152 as well as an adjusting channel element 160. Adjusting handle-element 140 comprises a longitudinal handle 142 having a first end 144 and a second end 146. Second end 146 comprises bolt element 147 having a screw-thread (not shown) which is in a parallel alignment to discharge direction A and in a perpendicular alignment to longitudinal handle 142.

As best seen in Fig. 6, first and second holes 150, 152 are arranged one above the other and in a slightly off-set orientation to each other in support plate 120 near fourth edge 120d. First hole 150 is fitted with a screw-thread (not shown) and suited to accommodate bolt element 147 of adjusting handle-element 140. Second hole 152 is also fitted with a screw-thread (not shown) and suited to accommodate a bolt-screw 154 also having a screw-thread (not shown). As it will be described later in more detail, adjusting handle-element 140 as well as bolt-screw 154 functioning as locking devices for locking discharge device D in a certain angular position.

As also shown in Fig. 6, adjusting channel element 160 comprises a circular sleeve element 162 with a curved channel element 164. Curved channel element 164 is essentially in form of a flat plate with a channel 165. The curvature of channel element 164 is suited to fit circular sleeve element 162. Channel 165 is defining a sector in which circular sleeve element 162 and consequently discharge device D can be pivoted around rotation axis R. The function of adjusting and locking the angular positioning of circular sleeve element 162 and discharge device D will be described later in more detail.

In the assembled state of adjusting device 130 as seen in Figs. 1 and 3, circular sleeve element 162 is fitted onto first flange 124 of support plate 120 and at circular opening 70 defined in the close vicinity of semi-circular third edge 40c of first spacing element 40 and arched first edge 50a of second spacing element 50. Channel 165 of curved channel element 164 is positioned on top of first and second holes 150, 152 of adjusting device 130. Bolt element 147 of adjusting handle-element 140 is fitted through channel 165 and into first hole 150. Bolt-screw 154 is fitted through channel 165 and into second hole 152. The angular position of discharge device D which is connected to circular sleeve element 162, is regulated and adjusted by adjusting handle-element 140 and bolt-screw 154. Discharge device D is pivotable around rotation axis R by means of circular sleeve element 162. Discharge device D can be pivot around rotation axis R along a sector defined by curved channel element 164 of circular sleeve element 162.

In order to secure discharge device D into a specific angular position relative to angular positioning means 100, adjusting handle-element 140 and bolt-screw 154 are respectively screwed tight into first and second holes 150, 152 by means of the respective screw-threads. When adjusting handle-element 140 and bolt-screw 154 are screwed into first and second holes 150, 152, circular sleeve element 162 is pressed against first surface 112 of adapter device 110, and thereby locking circular sleeve element 162 and consequently discharge device D at a specific angular position.

For amending the angular position of discharge device D, so that discharge device D can be pivoted around rotation axis R, adjusting handle-element 140 and bolt-screw 154 are respectively screwed out of first and second holes 150, 152. By screwing adjusting handle-element 140 and bolt-screw 154 out of first and second holes 150, 152, circular sleeve element 162 is no longer pressed against first surface 112 of adapter device 110, so that circular sleeve element 162 and consequently discharge device D are no longer locked at a specific angular position and free to pivot along the sector defined by channel 165.

In the following, the functioning and usage of discharge device D will be described:
As already described above, angular positioning device 100 enables discharge device D to be adjusted and locked in a specific angular position around rotation axis R and relative to angular positioning device 100. By changing the angular position of discharge device D, the inclination angle of guiding element 10 is changed as well. As shown in Fig. 1, by pivoting discharge device D in an anticlockwise direction in regard to discharge direction A, the inclination angle of guiding element 10 becomes steeper relative to a horizontal plane. Consequently, by pivoting discharge device D in a clockwise direction in regard to discharge direction A, the inclination angle of guiding element 10 becomes shallower relative to a horizontal plane.

After the filling operation of a not shown bag-like casing material with filling material, e.g. sausage meat, using a not shown clipping machine for producing not shown sausage-shaped products is concluded, a gathered plait-like portion between the individual sausage-shaped products, which is free of filling material, is formed by a not shown displacer unit of the clipping machine. One clip, which is also not shown, is then applied to the plait-like portion by a not shown closing means of the clipping machine in order to close the bag just filled. However, it is also possible to use the present invention together with a tubular-shaped packaging casing wherein the two closing clips are applied in the area of the plait-like portion. A first closing clip is applied to close the second end of the filled packaging material and a second closing clip is applied for closing the first end of the subsequent sausage-shaped product. Thereafter, said plait-like portion is severed between said two clips creating one complete sausage-shaped product and packaging material closed at its first end to be filled, in order to form the next sausage-shaped product. The completed stubularausage-shaped or bag-shaped product is then leaving the clipping machine due to its own weight or by other discharging units for transporting said completed sausage-shaped product from discharge area CD of the clipping machine to a further processing area or handling station. When the completed product is leaving discharge area CD of the clipping machine, said completed product is passed through circular hole 122 of support plate 120 and subsequently through circular opening 70 formed in the close vicinity of semi-circular third edge 40c of first spacing element 40 and arched first edge 50a of second spacing element 50. Depending on the tubular-or bag-length of the completed shaped product, said product is either dropped onto front surface 12 of guiding element 10 and then rolled towards fourth lateral surface 68 serving as an outlet for the completed product if the product is rather short, or, if the product is longer than the length of second spacing element 50, the product extends beyond the width of discharge device D, i.e. the length of second spacing element 50, a first portion of said product rests on front surface 12 of guiding element 10 and a second portion of said product reaches out of discharge device D. However, even if a second portion of the longer product extends beyond discharge device D, said product will also roll towards fourth lateral surface 68 serving as an outlet for the completed product. Pipe element 80 covering second edge 10b of guiding element 10, second edge 50b of second spacing element 50, second edge 30b of protecting plate 30, fourth edge 30d of protecting plate 30 as well as the curved corner between second and fourth edges 30b, 30d of protecting plate 30 helps to prevent the casing material of the product from being damaged by these edges and the operator from being injured by these edges.

Protecting plate 30 of discharge device D prevents a reaching-into in the discharge area CD of the clipping machine, in order to reduce or even eliminate the likelihood for the operator to be injured, as said protecting plate 30 blocks the direct access to the rather dangerous discharge area of the clipping machine.

As explained above, the components of the protecting means can be manufactured from a metal plate made from steel or stainless steel, aluminium or an alloy there from, or from plastic.

## Claims

1. A discharge device for a clipping machine for producing sausage-shaped products, like sausages, comprising:
at least one guiding element (10) for guiding a sausage-shaped product completed in the clipping machine and leaving the clipping machine along a discharge direction (A), from a discharge area (CD) of the clipping machine to a handling station for the sausage-shaped product next to the clipping machine, and
a protecting means (20) which surrounds together with the guiding element (10) at least partially the discharge area (CD) of the clipping machine, for avoiding a reaching-into in the discharge area (CD) of the clipping machine, and which provides together with the guiding element (10) at least one outlet opening for discharging the sausage-shaped product from the discharge device (D) to the next handling station,
**characterized by** an angular positioning means (100) for adjusting and locking the discharge device (D) pivotable around a rotation axis (R) which coincides with the discharge direction (A) of the sausage-shaped product leaving the clipping machine.

2. The discharge device according to claim 1,
**characterized in that** the protecting means (20) are formed by at least one protecting plate (30) as well as an at least one first spacing element (40), and that the protecting plate (30) and the guiding element (10) are arranged spaced apart to each other by the at least one first spacing element (40).

3. The discharge device according to claim 2,
**characterized in that** the at least one first spacing element (40) is arranged at the side edges of the guiding element (10) as well as the protecting plate (30) which both face to the clipping machine, and has an inlet opening (70) for the sausage-shaped product leaving the clipping machine.

4. The discharge device according to claim 2 or 3,
characterized that the protecting means (20) comprise at least one second spacing element (50).

5. The discharge device according to claim 4,
characterized that the second spacing element (50) is arranged at least substantially perpendicular to the first spacing element (40).

6. The discharge device according to any of claim 4 or 5, characterized that the protecting plate (30), the guiding element (10) as well as the first and second spacing element (40, 50) define a at least approximately cuboid-shaped flat box (60).

7. The discharge device according to claim 6,
characterized that at least one of the lateral surfaces of the cuboid-shaped box (60) are open.

8. The discharge device according to claim 7,
characterized that the lateral surfaces of the cuboid-shaped box (60) being opposite to the first and second spacing (40, 50) element are open.

9. The discharge device according to any of claims 6 to 8,
characterized that the second spacing element (50) being arranged at least approximately in the discharge direction (A) of the sausage-shaped product leaving the clipping machine and connecting the guiding element (10) with the protecting plate (30), define, referred to its cross-section, at least approximately a half circle being arched outwardly.

10. The discharge device according to any of claims 1 to 9,
characterized that at least the protecting means (20) are provided with at least one slit (56) which is preferably arranged at least substantially parallel to the edges of the protecting means (20) and the guiding element (10) facing to the clipping machine.

11. The discharge device according to claim 10,
characterized that the protecting plate (30) and the second spacing element (50) are provided with slits (56) which are preferably arranged parallel to each other and which have preferably a width being at least substantially equal to the width of the area between two succeeding slits (56) wherein preferably
the length of the slits (56) of the second spacing element (50) increase consecutively from the end of the second spacing element (50) being arranged proximal to the clipping machine, to the end of the second spacing (50) element being arranged distal to the clipping machine.

12. The discharge device according to any of claims 1 to 11,
characterized that discharge device (D) is adapted to be reversibly hinged away from clipping machine.

13. The discharge device according to claim 1,
**characterized in that** the angular positioning means (100) comprises an adapter device (110) and an adjusting device (130).

14. The discharge device according to any of claims 1 to 13,
**characterized in that** at least the corner of the protecting means (20) being farthest to the discharge area (CD) of the clipping machine is rounded.

## Patentansprüche

1. Austragvorrichtung für eine Clipmaschine zum Erzeugen von wurstförmigen Produkten, wie Würsten, umfassend:
mindestens ein Führungselement (10) zum Leiten eines in der Clipmaschine hergestellten und die Clipmaschine verlassenden wurstförmigen Produkts entlang einer Austragrichtung (A) aus einem Austragbereich (CD) der Clipmaschine zu einer Handhabungsstation für das wurstförmige Produkt neben der Clipmaschine, und
ein Schutzmittel (20), das zusammen mit dem Führungselement (10) den Austragbereich (CD) der Clipmaschine zumindest teilweise umgibt, um ein Hineingreifen in den Austragbereich (CD) der Clipmaschine zu verhindern, und die zusammen mit dem Führungselement (10) mindestens eine Auslassöffnung zum Austragen des wurstförmigen Produkts aus der Austragvorrichtung (D) zur nächsten Handhabungsstation vorsieht,
**gekennzeichnet durch** ein abgewinkeltes Positionierungsmittel (100) zum Justieren und Verriegeln der Austragvorrichtung (D), die um eine Drehachse (R) schwenkbar ist, die sich mit der Austragrichtung (A) des die Clipmaschine verlassenden wurstförmigen Produkts deckt.

2. Austragvorrichtung nach Anspruch 1,
**dadurch gekennzeichnet, dass** das Schutzmittel (20) durch mindestens eine Schutzplatte (30) sowie mindestens ein erstes Abstandselement (40) gebildet ist, und dass die Schutzplatte (30) und das Führungselement (10) durch das mindestens eine erste Abstandselement (40) mit Abstand zueinander angeordnet sind.

3. Austragvorrichtung nach Anspruch 2,
**dadurch gekennzeichnet, dass** das mindestens eine erste Abstandselement (40) an den Seitenkanten des Führungselements (10) sowie der Schutzplatte (30) angeordnet ist, die beide zur Clipmaschine weisen, und eine Einlassöffnung (70) für das die Clipmaschine verlassende wurstförmige Produkt aufweist.

4. Austragvorrichtung nach Anspruch 2 oder 3,
**dadurch gekennzeichnet, dass** das Schutzmittel (20) mindestens ein zweites Abstandselement (50) umfasst.

5. Austragvorrichtung nach Anspruch 4,
**dadurch gekennzeichnet, dass** das zweite Abstandselement (50) zumindest im Wesentlichen senkrecht zum ersten Abstandselement (40) angeordnet ist.

6. Austragvorrichtung nach einem der Ansprüche 4 oder 5,
**dadurch gekennzeichnet, dass** die Schutzplatte (30), das Führungselement (10) sowie das erste und das zweite Abstandselement (40, 50) einen zumindest annähernd quaderförmigen flachen Kasten (60) bilden.

7. Austragvorrichtung nach Anspruch 6,
**dadurch gekennzeichnet, dass** zumindest eine der seitlichen Flächen des quaderförmigen flachen Kastens (60) offen ist.

8. Austragvorrichtung nach Anspruch 7,
**dadurch gekennzeichnet, dass** die seitlichen Flächen des quaderförmigen flachen Kastens (60), die dem ersten und dem zweiten Abstandselement (40, 50) gegenüberstehen, offen sind.

9. Austragvorrichtung nach einem der Ansprüche 6 bis 8,
**dadurch gekennzeichnet, dass** das zweite Abstandselement (50), das zumindest annähernd in der Austragrichtung (A) des die Clipmaschine verlassenden wurstförmigen Produkts angeordnet ist und das Führungselement (10) mit der Schutzplatte (30) verbindet, bezüglich seines Querschnitts zumindest annähernd einen nach außen gebogenen Halbkreis bildet.

10. Austragvorrichtung nach einem der Ansprüche 1 bis 9,
**dadurch gekennzeichnet, dass** zumindest an dem Schutzmittel (20) mindestens ein Schlitz (56) vorgesehen ist, der vorzugsweise zumindest im Wesentlichen parallel zu den zur Clipmaschine weisenden Kanten des Schutzmittels (20) und des Führungselements (10) angeordnet ist.

11. Austragvorrichtung nach Anspruch 10,
**dadurch gekennzeichnet, dass** an der Schutzplatte (30) und an dem zweiten Abstandselement (50) Schlitze (56) vorgesehen sind, die vorzugsweise parallel zueinander angeordnet sind, und die vorzugsweise eine Breite aufweisen, die zumindest im Wesentlichen gleich der Breite der Fläche zwischen zwei aufeinanderfolgenden Schlitzen (56) ist, wobei vorzugsweise
sich die Längen der Schlitze (56) des zweiten Abstandselements (50) fortlaufend von dem proximal zur Clipmaschine angeordneten Ende des zweiten Abstandselements (50) zu dem distal zur Clipmaschine angeordneten Ende des zweiten Abstandselements (50) vergrößern.

12. Austragvorrichtung nach einem der Ansprüche 1 bis 11,
**dadurch gekennzeichnet, dass** die Austragvorrichtung (D) geeignet ist, reversibel von der Clipmaschine abgeklappt zu werden.

13. Austragvorrichtung nach Anspruch 1,
**dadurch gekennzeichnet, dass** das abgewinkelte Positionierungsmittel (100) eine Adaptervorrichtung (110) und eine Justiervorrichtung (130) umfasst.

14. Austragvorrichtung nach einem der Ansprüche 1 bis 13,
**dadurch gekennzeichnet, dass** zumindest die Ecke des Schutzmittels (20), die am weitesten zum Austragbereich (CD) der Clipmaschine liegt, abgerundet ist.

## Revendications

1. Dispositif de déchargement pour une machine d'agrafage de production de produits en forme de saucisse, comme des saucisses, comprenant :
au moins un élément (10) de guidage pour guider un produit en forme de saucisse achevé dans la machine d'agrafage et quittant la machine d'agrafage le long d'une direction (A) de déchargement, en allant d'une zone (CD) de déchargement de la machine d'agrafage à un poste de manutention du produit en forme de saucisse près de la machine d'agrafage et
un moyen (20) de protection, qui entoure ensemble avec l'élément (10) de guidage, au moins en partie, la zone (CD) de déchargement de la machine d'agrafage pour éviter d'atteindre la zone (CD) de déchargement de la machine d'agrafage et qui ménage ensemble avec l'élément (10) de guide au moins une ouverture de sortie pour décharger le produit en forme de saucisse du dispositif (D) de déchargement au poste voisin de manutention,
**caractérisé par** un moyen (100) de mise en position angulaire pour régler et verrouiller le dispositif (D) de déchargement pivotable autour d'un axe (R) de rotation, qui coïncide avec la direction (A) de déchargement du produit en forme de saucisse quittant la machine d'agrafage.

2. Dispositif de déchargement suivant la revendication 1,
**caractérisé en ce que** le moyen (20) de protection est formé par au moins une plaque (30) de protection, ainsi que par au moins un premier élément (40) de mise à distance, et **en ce que** la plaque (30) de protection et l'élément (10) de guidage sont agencés à distance l'un de l'autre par le au moins un premier élément (40) de mise à distance.

3. Dispositif de déchargement suivant la revendication 2,
**caractérisé en ce que** le au moins un premier élément (40) de mise à distance est agencé sur les bords latéraux de l'élément (10) de guidage, ainsi que de la plaque (30) de protection, qui font face tous deux à la machine d'agrafage et a une ouverture (70) d'entrée pour le produit en forme de saucisse quittant la machine d'agrafage.

4. Dispositif de déchargement suivant la revendication 2 ou 3,
**caractérisé en ce que** le moyen (20) de protection comprend au moins un deuxième élément (50) de mise à distance.

5. Dispositif de déchargement suivant la revendication 4,
**caractérisé en ce que** le deuxième élément (50) de mise à distance est agencé au moins sensiblement perpendiculairement au premier élément (40) de mise à distance.

6. Dispositif de déchargement suivant l'une quelconque des revendications 4 ou 5,
**caractérisé en ce que** la plaque (30) de protection, l'élément (10) de guidage, ainsi que le premier et le deuxième éléments (40, 50) de mise à distance définissent au moins approximativement une boîte (60) plate en forme de cuboïde.

7. Dispositif de déchargement suivant la revendication 6,
**caractérisé en ce qu'**au moins l'une des surfaces latérales de la boîte (60) en forme de cuboïde est ouverte.

8. Dispositif de déchargement suivant la revendication 7,
**caractérisé en ce que** les surfaces latérales de la boîte (60) en forme de cuboïde opposées au premier et au deuxième éléments (40, 50) de mise à distance sont ouvertes.

9. Dispositif de déchargement suivant l'une quelconque des revendications 6 à 8,
**caractérisé en ce que** le deuxième élément (50) de mise à distance disposé au moins approximativement dans la direction (A) de déchargement du produit en forme de saucisse quittant la machine d'agrafage et reliant l'élément (10) de guidage à la plaque (30) de protection, définit, rapporté à sa section transversale, au moins à peu près un demi-cercle arqué vers l'extérieur.

10. Dispositif de déchargement suivant l'une quelconque des revendications 1 à 9,
**caractérisé en ce qu'**au moins le moyen (20) de protection est prévu en ayant une fente (56), qui est disposée de préférence en étant sensiblement parallèle aux bords du moyen (20) de protection et de l'élément (10) de guidage faisant face à la machine d'agrafage.

11. Dispositif de déchargement suivant la revendication 10,
**caractérisé en ce que** la plaque (30) de protection et le deuxième élément (50) de mise à distance sont pourvus de fentes (56), qui sont de préférence disposées parallèlement l'une à l'autre et qui ont de préférence une largeur au moins sensiblement égale à la largeur de la zone entre deux fentes (56) successives, dans lequel de préférence
la longueur des fentes (56) du deuxième élément (50) de mise à distance augmente consécutivement de l'extrémité du deuxième élément (50) de mise à distance disposé proximalement à la machine d'agrafage à l'extrémité du deuxième élément (50) de mise à distance disposé distalement à la machine d'agrafage.

12. Dispositif de déchargement suivant l'une quelconque des revendications 1 à 11,
**caractérisé en ce que** le dispositif (D) de déchargement est conçu pour être articulé de manière réversible en s'éloignant de la machine d'agrafage.

13. Dispositif de déchargement suivant la revendication 1,
**caractérisé en ce que** le moyen (100) de mise en position angulaire comprend un dispositif (110) formant adaptateur et un dispositif (130) de réglage.

14. Dispositif de déchargement suivant l'une quelconque des revendications 1 à 13,
**caractérisé en ce qu'**au moins le point du moyen (20) de protection le plus loin de la zone (CD) de déchargement de la machine d'agrafage est arrondi.
